# EUROPÄISCHE PATENTANMELDUNG

(11) **EP 4 790 296 A1**
(43) Veröffentlichungstag der Anmeldung: **12.08.2026**
(21) Anmeldenummer: 25156084.3
(22) Anmeldetag: 05.02.2025
(51) Int. Cl.: F16L 19/025, F16L 19/02

(54) **ANORDNUNG ZUR VERBINDUNG VON EINEM ROHRABSCHNITT MIT EINEM MUFFENABSCHNITT**

(71) Anmelder: Geberit International AG, 8645 Jona (CH)
(72) Erfinder: HAUSHEER, Roman, 6313 Menzingen (CH)
(74) Vertreter: Frischknecht, Harry Ralph

(57) **Zusammenfassung**

Eine Anordnung (1) zur Verbindung von einem Rohrabschnitt (2) mit einem Muffenabschnitt (3) umfasst
den genannten Rohrabschnitt (2) mit einer sich um eine Mittelachse (M) herumerstreckenden Seitenwand (4), welche einen Rohrinnenraum (5) seitlich begrenzt, welche Seitenwand (4) aussenseitig einen ersten Lagerabschnitt (6) mit einer ersten Lagerfläche (7), welche sich um die Mittelachse (M) herum erstreckt, aufweist, und
ein Gewindeelement (8) mit einem zweiten Lagerabschnitt (9), der eine zweite sich um die Mittelachse (M) herumerstreckende Lagerfläche (10) aufweist, sowie mit einem Aussengewinde (11), welches mit einem Innengewinde (12) des Muffenabschnitts (3) verschraubbar ist,
wobei das Gewindeelement (7) mit der zweiten Lagerfläche (10) auf der ersten Lagerfläche (7) um die Mittelachse (M) relativ zum feststehenden Rohrabschnitt (2) drehbar gelagert ist.

## Beschreibung

### TECHNISCHES GEBIET

Die vorliegende Erfindung betrifft eine Anordnung zur Verbindung von einem Rohrabschnitt mit einem Muffenabschnitt gemäss Anspruch 1.

### STAND DER TECHNIK

Aus dem Stand der Technik sind Verbindungssysteme zur Verbindung eines Rohrabschnitts mit einem Muffenabschnitt bekannt geworden. Solche Rohrabschnitte können beispielsweise Teil eines Verteilers für die Trinkwasserversorgung in einem Gebäude sein. Typischerweise werden mehrere Verteiler miteinander verbunden, bis die gewünschte Zahl von Abgängen erreicht wird. Jeder der Verteiler umfasst dabei an einer Seite ein Rohrabschnitt und an der anderen Seite ein Muffenabschnitt. Der Rohrabschnitt des einen Verteilers kann mit dem Muffenabschnitt des anderen Verteilers verbunden werden.

### DARSTELLUNG DER ERFINDUNG

Ausgehend von diesem Stand der Technik liegt der Erfindung eine Aufgabe zugrunde, eine Anordnung zur Verbindung von einem Rohrabschnitt mit einem Muffenabschnitt anzugeben, welche einfach montiert werden kann.

Diese und andere Aufgaben löst der Gegenstand nach Anspruch 1. Demgemäss umfasst eine Anordnung zur Verbindung von einem Rohrabschnitt mit einem Muffenabschnitt den genannten Rohrabschnitt und ein Gewindeelement. Der Rohrabschnitt weist eine sich um eine Mittelachse herumerstreckenden Seitenwand auf, welche einen Rohrinnenraum seitlich begrenzt. Die Seitenwand weist aussenseitig einen ersten Lagerabschnitt mit einer ersten Lagerfläche, welche sich um die Mittelachse herum erstreckt, auf. Das Gewindeelement weist einen zweiten Lagerabschnitt mit einer zweiten sich um die Mittelachse herumerstreckenden Lagerfläche auf. Das Gewindeelement weist weiterhin ein Aussengewinde auf, welches mit einem Innengewinde des Muffenabschnitts verschraubbar ist. Das Gewindeelement ist mit der zweiten Lagerfläche auf der ersten Lagerfläche um die Mittelachse relativ zum feststehenden Rohrabschnitt drehbar gelagert.

Durch die Drehbarkeit des Gewindeelements relativ zum feststehenden Rohrabschnitt ergeht der Vorteil, dass die Montage bei erschwert zugänglichen Stellen an Rohrsystem vereinfacht wird. Das Gewindeelement kann relativ zum feststehenden Rohrabschnitt und zum feststehenden Muffenabschnitt verdreht werden, und somit kann die Schraubverbindung zwischen dem Muffenabschnitt und dem Gewindeelement erstellt werden.

Weiter kann durch die Drehbarkeit des Gewindeelements eine werkzeuglose Montage erfolgen.

Vorzugsweise sind die Lagerflächen als zylindrische Lagerflächen mit einem kreiszylindrischen Querschnitt ausgebildet. Vorzugsweise ist der Aussendurchmesser der ersten Lagerflächen leicht kleiner als der Innendurchmesser der zweiten Lagerfläche, so dass zwischen den beiden Lagerflächen radiales Spiel vorhanden ist.

Vorzugsweise ist das radiale Spiel im Durchmesser grösser als 0.1 Millimeter, insbesondere grösser als 0.2 Millimeter. Besonders bevorzugt liegt das radiale Spiel im Durchmesser im Bereich von 0.2 bis 0.6 Millimeter. Das genannte Spiel ist besonders bei Durchmessern der Lagerflächen im Bereich von 12 Millimeter bis 48 Millimeter vorteilhaft. Das Spiel kann bei grösseren Durchmessern auch grösser sein.

Vorzugsweise erstrecken sich die Lagerflächen radial gesehen jeweils vollständig um die Mittelachse herum. Im aufgesetzten Zustand umgibt die zweite Lagerfläche die erste Lagerfläche. Mit anderen Worten gesagt ist die erste Lagerfläche als Schaft und die zweite Lagefläche als Hülse ausgebildet, wobei die Hülse den Schaft umgibt.

Vorzugsweise wird das Gewindeelement durch mindestens zwei miteinander verbindbare Elementteile bereitgestellt. Durch die Ausbildung des Gewindeelements mit den beiden Elementteilen kann das Gewindeelement einfach an den Rohrabschnitt montiert werden.

Vorzugsweise sind die Elementteile mit einer Bewegung in eine Richtung quer zur Mittelachse auf den ersten Lagerabschnitt aufsetzbar.

Vorzugsweise sind genau zwei der genannten Elementteile vorhanden. Jedes der genannten Elementteile erstreckt sich mit seinem Lagerabschnitt bzw. seiner Lagerfläche jeweils um 180° um die Mittelachse herum.

Vorzugsweise weisen die Elementteile jeweils eine erste Kontaktfläche und eine zweite Kontaktfläche auf. Im aufgesetzten Zustand sind die jeweiligen Kontaktflächen von zwei benachbarten Elementteilen miteinander in Kontakt.

Die Kontaktflächen bilden in Umfangsrichtung gesehen jeweils eine Endfläche am Elementteil.

Im aufgesetzten Zustand ist die erste Kontaktfläche des einen Elementteils mit der zweiten Kontaktflächen eines anderen Elementteils in Kontakt. Die beiden genannten Kontaktteile liegen benachbart zueinander.

Vorzugsweise liegen die genannten Kontaktflächen in geometrischen Ebenen, welche sich durch die Mittelachse hindurch erstrecken.

Vorzugsweise sind jeweils zwei benachbart zueinander liegende Elementteile über mindestens eine Rastverbindung miteinander verbindbar, wobei die mindestens eine Rastverbindung durch mindestens eine Rastlasche und eine Rastausnehmung bereitgestellt wird, wobei die mindestens eine Rastlasche im verbundenen Zustand verrastend in die Rastausnehmung eingreift.

Vorzugsweise ragt die Rastlasche von der genannten Kontaktfläche ab und die Rastausnehmung erstreckt sich von der genannten Kontaktfläche in den das Elementteil hinein.

Vorzugsweise liegt die Rastlasche im Wesentlichen spielfrei in der Rastausnehmung. Dies insbesondere in Richtung der Mittelachse und/oder in Richtung quer zur Mittelachse gesehen. Hierdurch werden die Elementteile zueinander ausgerichtet, so dass die Abschnitte des Aussengewindes passgenau ineinander eingreifen. Im Wesentlichen spielfrei ist so zu verstehen, dass die Rastlasche und die Rastausnehmung so dimensioniert sind, dass die Rastlasche ohne grösseren Widerstand in die Rastausnehmung eingleiten kann.

Besonders bevorzugt liegt die Rastlasche in Richtung der Mittelachse gesehen im Wesentlichen spielfrei in der Rastausnehmung und in Richtung quer zur Mittelachse weist die Rastlasche leichtes bzw. minimales Spiel in der Rastausnehmung aus, so dass der Rasteingriff zwischen Rastlasche und Rastausnehmung bereitstellbar ist.

Vorzugsweise weist das Aussengewinde ein Gewindeprofil auf. Jedes der Elementteile weist einen Abschnitt des Gewindeprofils auf, wobei die Abschnitte des Gewindeprofils von benachbarten Elementteilen jeweils fluchtend zueinander sind, so dass im aufgesetzten Zustand ein kontinuierlich umlaufendes Gewinde bereitgestellt wird.

Vorzugsweise ist der Gewindeanfang und das Gewindeende auf dem gleichen Elementteil angeordnet, wobei das andere Elementteil die anderen Abschnitte vom Gewinde aufweist. In einer anderen Variante kann der Gewindeanfang und das Gewindeende auch an unterschiedlichen Elementteilen angeordnet sein.

Vorzugsweise weist der erste Lagerabschnitt zwei beabstandete, zueinander liegende Anschlagsflächen auf. Die Anschlagsflächen erstrecken sich von der ersten Lagerfläche weg. Das Gewindeelement verfügt über zwei beabstandete Stirnflächen. Im aufgesetzten Zustand sind die jeweiligen Anschlagsfläche den jeweiligen Stirnflächen des Gewindeelements zugewandt.

Die Anschlagsflächen ragen radial von der erste Lagerfläche ab und begrenzen diese in Richtung der Mittelachse gesehen.

Vorzugsweise ist der Abstand zwischen den beiden Stirnflächen in Richtung der Mittelachse gesehen leicht kleiner als der Abstand zwischen den beiden Anschlagsflächen in Richtung der Mittelachse gesehen, so dass das Gewindeelement mit leichtem Spiel auf dem ersten Lagerabschnitt liegt.

Vorzugsweise weist der Rohrabschnitt ein Frontende auf. Zwischen dem Frontende und dem ersten Lagerabschnitt ist eine sich um die Mittachse herum erstreckende Dichtfläche angeordnet. An der Dichtfläche ist ein Dichtelement des Muffenabschnitts platzierbar. Alternativerweise ist an der Dichtfläche ein Dichtelement angeordnet, wobei die Dichtfläche in diesem Fall vorzugsweise Teil einer Nute ist.

Vorzugsweise weist das Gewindeelement einen Betätigungsabschnitt auf. Der Betätigungsabschnitt weist eine radiale Ausdehnung auf, die grösser ist als der Aussendurchmesser des Aussengewindes. Der Betätigungsabschnitt ist vorzugsweise Teil eines Flansches, der vom Gewindeelement abragt. Vorzugsweise weist der Betätigungsabschnitt eine Mehrzahl von Griffmulden auf, an welchen der Installateur das Gewindeelement ergreifen kann.

Vorzugsweise weist das Gewindeelement einen Indikatorring oder eine Indikatormarkierung auf. Der Indikatorring bzw. die Indikatormarkierung ist derart am Gewindeelement angeordnet, dass bei vollständig erstellter Verbindung der Indikatorring bzw. die Indikatormarkierung durch den Muffenabschnitt überdeckt sind, so dass der Indikatorring bzw. die Indikatormarkierung nicht mehr sichtbar sind.

Vorzugsweise weist der erste Lagerabschnitt mindestens ein erstes Ratschenelement auf und der zweite Lagerabschnitt weist mindestens ein zweites Ratschenelement auf. Die beiden Ratschenelemente stellen eine Ratschenfunktion zwischen dem Gewindeelement und dem Rohrabschnitt bereit.

Durch die Anordnung wird dem Installateur bei der Drehung des Gewindeelements eine haptische Rückmeldung bereitgestellt. Zudem stellt das Ratschenelement eine Sicherung gegen unerwünschtes Verdrehen bereit.

In einer ersten Variante ist ein erstes Ratschenelement und eine Vielzahl von zweiten Ratschenelementen vorhanden, wobei die zweiten Ratschenelemente in regelmässigen Abständen zueinander angeordnet sind. In einer zweiten Variante ist ein zweites Ratschenelement und eine Vielzahl von ersten Ratschenelementen vorhanden, wobei die ersten Ratschenelemente in regelmässigen Abständen zueinander angeordnet sind.

Vorzugsweise ist der Rohrabschnitt Teil eines Verteilers, wobei der Verteiler mindestens einen Anschlussstutzen aufweist.

Vorzugsweise ragt einer der genannten Anschlussstutzen quer zur Mittelachse von der Seitenwand ab.

Vorzugsweise ist der Rohrabschnitt aus Metall, insbesondere aus Messing, wie CW724R bzw.CuZn21Si3P oder CC470K bzw. CuSn4Zn2PS. Vorzugsweise ist das Gewindeelement aus Kunststoff, insbesondere aus einem Polyamid, wie PA-GF oder PA-I-GF.

Vorzugsweise umfasst die Anordnung weiterhin einen Muffenabschnitt mit dem Innengewinde. Bei der Montage sind der Muffenabschnitt und der Rohrabschnitt radial zur Mittelachse zueinander ausrichtbar. Das Gewindeelement ist relativ zum feststehenden Muffenabschnitt und zum feststehenden Rohrabschnitt drehbar, derart, dass das Aussengewinde mit dem Innengewinde verschraubbar ist.

Vorzugsweise weist der Muffenabschnitt eine Nute auf, in welcher ein Dichtelement, insbesondere ein Dichtungsring oder ein O-Ring, angeordnet ist.

Vorzugsweise weist der Muffenabschnitt eine Anschlagsfläche auf, an welcher im vollständig montierten Zustand eine vordere Stirnfläche des Rohrabschnitts anschlägt. Die Dichtfläche und das Dichtelement sind derart angeordnet, dass diese dichtend miteinander in Kontakt sind, wenn die Anschlagsfläche und die Stirnfläche anschlagend miteinander in Kontakt sind. Vorzugsweise erfolgt das Erstellen der Dichtfunktion gegen Ende der vollständigen Verschraubung, wenn die Stirnfläche die passende Anschlagsfläche im Muffenabschnitt berührt. Das hat insbesondere den Vorteil, dass bei nicht vollständiger Verschraubung bei einer Dichtheitsprüfung eine Undichtheit der Verbindung entdeckt werden kann.

Der oben genannte Indikatorring bzw. die Indikatormarkierung liegt derart relativ zur Dichtfläche und Dichtelement, dass die Verdeckung erst dann erfolgt, wenn die Dichtfläche und das Dichtelement in dichtender Verbindung miteinander sind.

Das Aussengewinde ist vorzugsweise ein G-Gewinde und das Innengewinde ist vorzugsweise ein Rp-Gewinde. Es handelt sich demnach vorzugsweise um Rohrgewinde mit Zollabmessungen.

Ein Verfahren dient zur Montage einer Anordnung nach obiger Beschreibung. In einem Schritt der Ausrichtung werden der Rohrabschnitt und der Muffenabschnitt relativ zueinander bezüglich einer Radialstellung radial zur Mittelachse ausgerichtet. In einem Schritt der Verbindung ist das Gewindeelement relativ zum feststehenden Rohrabschnitt und zum feststehenden Muffenabschnitt drehbar, derart, dass das Aussengewinde mit dem Innengewinde verschraubt wird.

In einer ersten Variante des Verfahrens erfolgt der Schritt der Ausrichtung vor dem Schritt der Verbindung. In einer zweiten Variante des Verfahrens erfolgt der Schritt der Verbindung vor dem Schritt der Ausrichtung. Durch die drehbare Lagerung des Gewindeelements auf dem Rohrabschnitt kann dem Installateur hier eine Anordnung bereitgestellt werden, welche in vielfältiger Art und Weise montierbar ist.

Wenn das Gewindeelement mit den oben genannten Elementteilen bereitgestellt wird, werden die Elementteile vor der dem ersten Schritt auf den ersten Lagerabschnitt aufgesetzt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Explosionsansicht einer erfindungsgemässen Anordnung nach einer ersten Ausführungsform;
- Fig. 2: eine Schnittdarstellung durch die Anordnung nach Figur 1 im montierten Zustand, wobei der Schnitt durch die Mittelachse verläuft;
- Fig. 3: eine Schnittdarstellung durch die Anordnung nach Figur 1 im montierten Zustand, wobei der Schnitt quer zur Mittelachse verläuft;
- Fig.4.: eine perspektivische Ansicht der Anordnung nach den vorhergehenden Figuren während der Montage;
- Fig. 5: die Ansicht nach der Fig. 5 nach der Montage;
- Fig. 6: eine perspektivische Explosionsansicht einer Weiterbildung der Anordnung nach den vorhergehenden Figuren; und
- Fig. 7: eine geschnittene Detailansicht nach Figur 6.

### BESCHREIBUNG BEVORZUGTER AUSFÜHRUNGSFORMEN

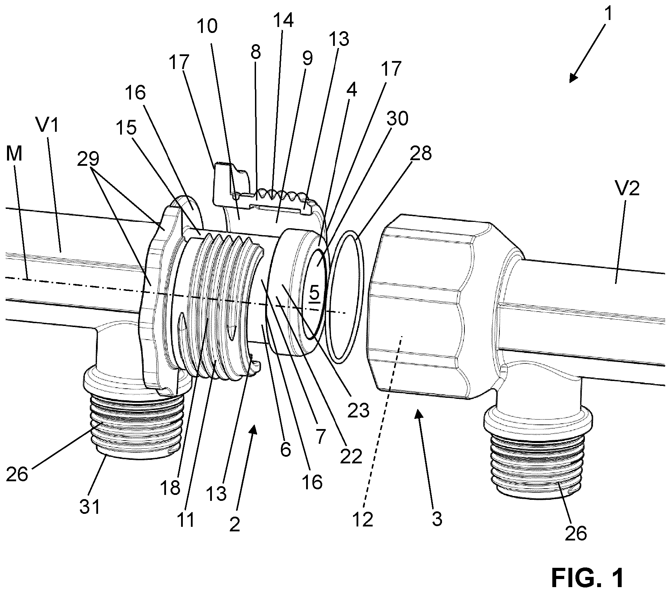

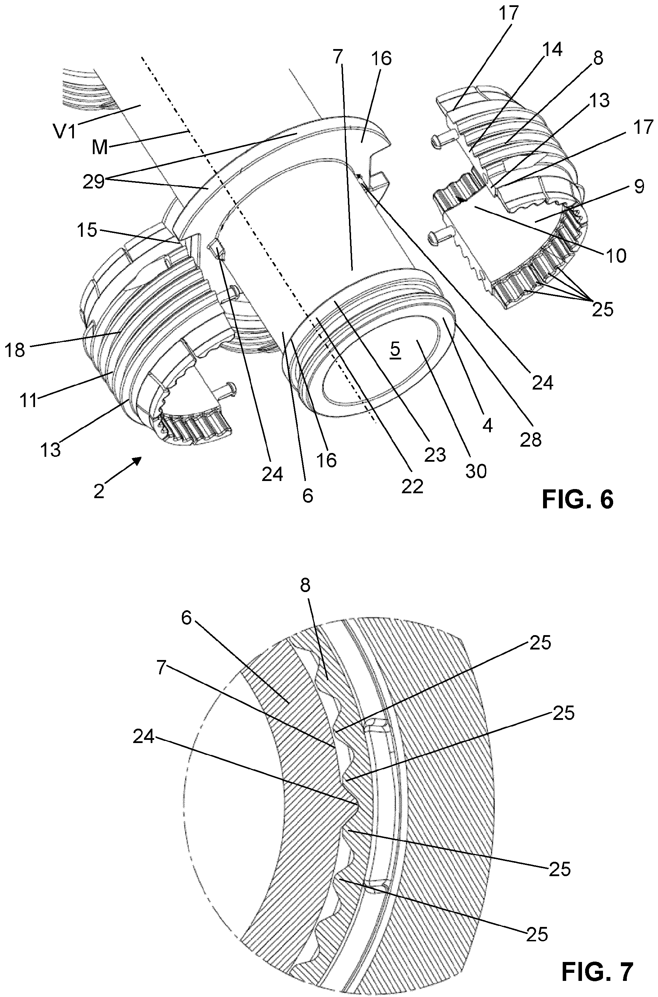

In den Figuren 1 bis 5 wird eine bevorzugte Ausführungsform einer Anordnung 1 nach einer bevorzugten Ausführungsform der vorliegenden Erfindung gezeigt. In den Figuren 6 und 7 wird eine besonders bevorzugte Weiterbildung gezeigt.

Die Anordnung 1 dient zur Verbindung von einem Rohrabschnitt 2 mit einem Muffenabschnitt 3. Der Rohrabschnitt 2 ist hier Teil eines ersten Verteilers V1 und der Muffenabschnitt 3 ist hier Teil eines zweiten Verteilers V2. Die beiden Verteiler V1 und V2 werden über die Verbindung zwischen dem Rohrabschnitt 2 und dem Muffenabschnitt 3 miteinander verbunden. Die Anordnung 1 kann aber auch bei anderen Rohrstrukturen eingesetzt werden.

Von den Figuren 1 bis 3 ist der Aufbau der Anordnung 1 ersichtlich. Der Rohrabschnitt 2 ist mit einer sich um eine Mittelachse M herumerstreckende Seitenwand 4 ausgebildet. Die Seitenwand 4 begrenzt einen Rohrinnenraum 5 seitlich. Aussenseitig weist die Seitenwand 4 einen ersten Lagerabschnitt 6 mit einer ersten Lagerfläche 7 auf. Die erste Lagerfläche 7 erstreckt sich vollständig um die Mittelachse M herum und ist hier als zylindrische Lagerfläche 7 ausgebildet. Der Rohrinnenraum 5 ist über einen Rohreingang 30 zugänglich.

Die Anordnung umfasst weiterhin ein Gewindeelement 8. Das Gewindeelement 8 weist einen zweiten Lagerabschnitt 9 auf, welcher eine zweite sich um die Mittelachse M herumerstreckende Lagerfläche 10 aufweist. Die zweite Lagerfläche 10 erstreckt sich vollständig um die Mittelachse M herum und ist hier als zylindrische Lagerfläche 10 ausgebildet. Weiter weist das Gewindeelement 8 ein Aussengewinde 11 auf. Das Aussengewinde 11 ist mit einem Innengewinde 12 des Muffenabschnitts 3 verschraubbar. Das Gewindeelement 8 ist mit der zweiten Lagerfläche 10 auf der ersten Lagerfläche 7 um die Mittelachse M relativ zum feststehenden Rohrabschnitt 2 drehbar gelagert. Das heisst, das Gewindeelement 8 lässt sich relativ zum feststehenden Rohrabschnitt 2 drehen. Dabei gleitet die zweite Lagerfläche 10 auf der ersten Lagerfläche 7. Ein Vorteil dieser Lagerung ist, dass zwei Verteiler V1, V2 aufgrund dieser Lagerung auch bei einer bereits erfolgten Verschraubung noch relativ zueinander verschwenkbar sind und somit zueinander ausrichtbar sind. Die Ausrichtung kann auch vor der Verschraubung erfolgen.

Das Gewindeelement 8 wird in der gezeigten Ausführungsform durch mindestens zwei, hier genau zwei, Elementteile 13 bereitgestellt. Die Elementteile 13 sind separat zueinander ausgebildet und lassen sich beim Aufsetzen auf den ersten Lagerabschnitt 6 miteinander verbinden. Dabei liegen die beiden Elementteile 13 im verbundenen Zustand am ersten Lagerabschnitt 6 an. Ausgehend von der Position, wie in der Figur 1 gezeigt, lassen sich die Elementteile 13 mit einer Bewegung in eine Richtung Q quer zur Mittelachse M auf den ersten Lagerabschnitt 6 aufsetzen. Im aufgesetzten Zustand bilden die Elementteile 13 das Gewindeelement 8, welches dann drehbar gelagert ist.

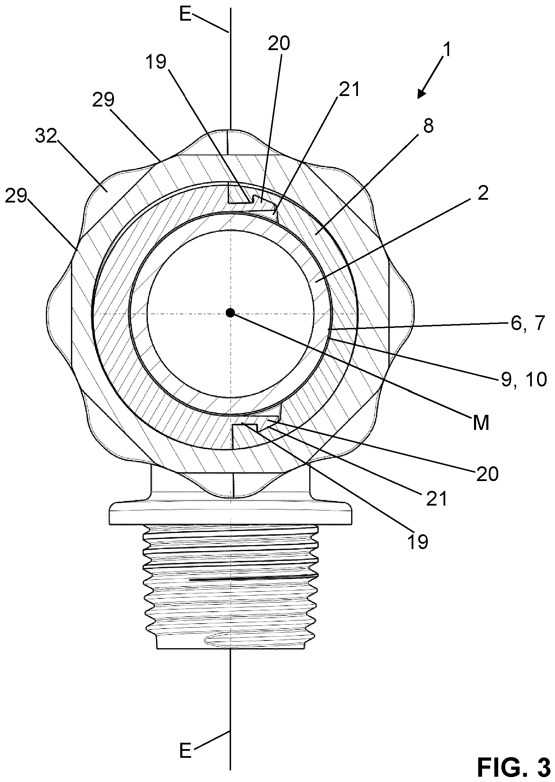

Von den Figuren 1 und 3, welche eine Schnittdarstellung rechtwinklig zur Mittelachse M zeigen, ist ersichtlich, dass die Elementteile 13 jeweils eine erste Kontaktfläche 14 und eine zweite Kontaktfläche 15 aufweisen. Im aufgesetzten Zustand sind die jeweiligen Kontaktflächen 14, 15 von zwei benachbarten Elementteilen 13 miteinander in Kontakt.

Die Kontaktflächen 14, 15 liegen vorzugsweise in geometrischen Ebenen, welche sich durch die Mittelachse M hindurch erstrecken. In der Figur 3 ist eine solche Ebene mit dem Bezugszeichen E eingezeichnet. Hierdurch wird sichergestellt, dass zwischen den Kontaktflächen 14, 15 im aufgesetzten Zustand ein flächiger Kontakt bereitgestellt werden kann.

Von der Figur 3 ist eine beispielhafte Verbindung zwischen den Elemententeilen 13 ersichtlich. Jeweils zwei benachbarte Elementteile 13 werden über mindestens eine Rastverbindung 19 miteinander verbunden. Die mindestens eine Rastverbindung 19 wird hier durch eine Rastlasche 20 und eine Rastausnehmung 21 bereitgestellt. Die mindestens eine Rastlasche 20 greift im verbundenen Zustand verrastend in die Rastausnehmung 21 ein.

Das Aussengewinde 11 weist ein Gewindeprofil 18 auf. Jedes der Elementteile 13 weist einen Abschnitt des Gewindeprofils 18 auf. Die Abschnitte des Gewindeprofils 18 von benachbarten Elementteilen liegen jeweils fluchtend zueinander, so dass im aufgesetzten Zustand ein kontinuierlich umlaufendes Gewinde bereitgestellt wird.

Die Rastlasche 20 liegt im Wesentlichen spielfrei in der Rastausnehmung 21. Dies insbesondere in Richtung der Mittelachse M gesehen. Hierdurch können die Elementteile 13 zueinander in Richtung der Mittelachse M ausgerichtet werden, so dass die Gewindeabschnitte des Aussengewindes 11 zueinander ausgerichtet sind.

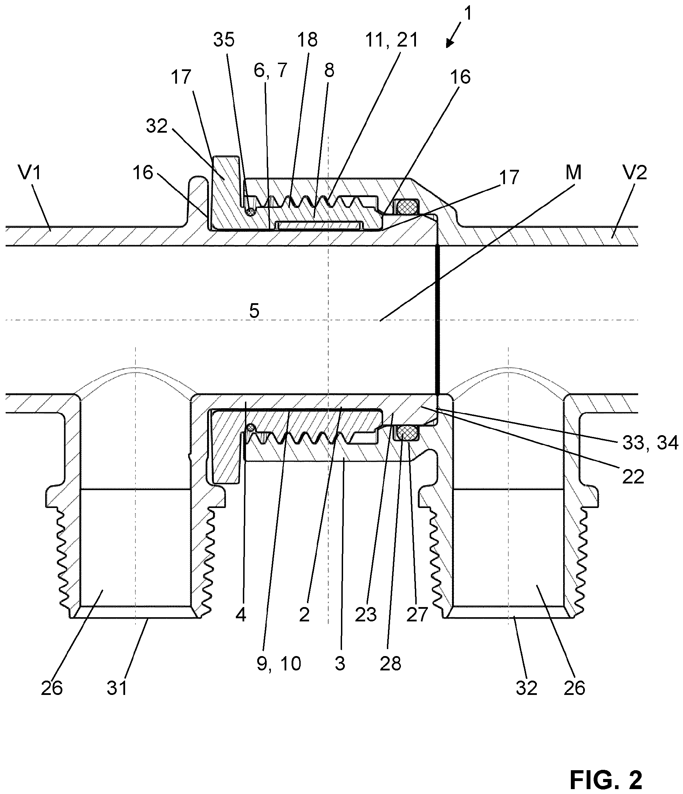

Der erste Lagerschnitt 6 weist, wie von den Figuren 1 und 2 gezeigt wird, weiterhin zwei beabstandet zueinander liegende Anschlagsflächen 16 auf. Die Anschlagsflächen 16 stehen hier radial von der ersten Lagerfläche 7 ab und markieren in Richtung der Mittelachse M gesehen jeweils einen Endbereich der ersten Lagerfläche 7. Das Gewindeelement 8 verfügt über zwei beabstandete Stirnflächen 17. Im aufgesetzten Zustand sind die jeweiligen Anschlagsfläche 16 mit den jeweiligen Stirnflächen 17 des Gewindeelements 8 zugewandt sind. Zwischen den beiden Anschlagsflächen 16 liegt das Gewindeelement 8 und wird durch die beiden Anschlagsflächen 16 bezüglich einer Bewegung in Richtung der Mittelachse M gesichert. Vorzugsweise liegt das Gewindeelement 8 mit axialem Spiel zwischen den beiden Anschlagsflächen 16.

Von der Figur 2 ist weiterhin ersichtlich, dass Rohrabschnitt 2 ein Frontende 22 aufweist. Zwischen dem Frontende 22 und dem ersten Lagerabschnitt 6 ist eine sich um die Mittachse M herum erstreckende Dichtfläche 23 angeordnet. An der Dichtfläche 23 ist ein Dichtelement 28 des Muffenabschnitts 3 platzierbar. In der gezeigten Ausführungsform liegt das Dichtelement 28 in einer Nute 27 am Muffenabschnitt 3. Die Nute 27 liegt dabei in Einschubrichtung des Rohrabschnitts 2 in den Muffenabschnitt 3 gesehen, hinter dem Innengewinde 4.

Das Gewindeelement 8 weist einen optionalen Betätigungsabschnitt 32 auf. Der Betätigungsabschnitt 32 weist eine radiale Ausdehnung auf, die grösser ist als der Aussendurchmesser des Aussengewindes 11. Der Betätigungsabschnitt 32 ist flanschartige am Gewindeelement 8 angeformt. In der gezeigten Ausführungsform weist der Betätigungsabschnitt 32 eine der genannten Stirnflächen auf. Zudem weist der Betätigungsabschnitt 32 aussenseitig eine Vielzahl von Griffmulden 29 auf.

Vorzugsweise weist das Gewindeelement 8, wie von der Figur 2 ersichtlich einen Indikatorring 35 auf. Der Indikatorring 35 ist derart am Gewindeelement 8 angeordnet, dass bei vollständig erstellter Verbindung der Indikatorring 35 durch den Muffenabschnitt überdeckt ist. Der Indikatorring 35 ist somit nicht mehr sichtbar.

Weiter weist der Muffenabschnitt 3 eine Anschlagsfläche 33 auf, an welcher im vollständig montierten Zustand eine vordere Stirnfläche 34 des Rohrabschnitts 2 anschlägt. Die Dichtfläche 23 und das Dichtelement 28 sind derart angeordnet, dass diese dichtend miteinander in Kontakt sind, wenn die Anschlagsfläche 33 und die Stirnfläche 34 anschlagend miteinander in Kontakt sind.

Der Verteiler V1 umfasst in der gezeigten Ausführungsform mindestens einen Anschlussstutzen 26 auf. Der Anschlussstutzen 26 steht winklig geneigt, hier rechtwinklig, zur Mittelachse M. Der Anschlussstutzen 26 weist einen Rohrausgang 31 auf, welcher in den Rohrinnenraum 5 mündet. Der Verteiler V2 kann diese Merkmale auch aufweisen.

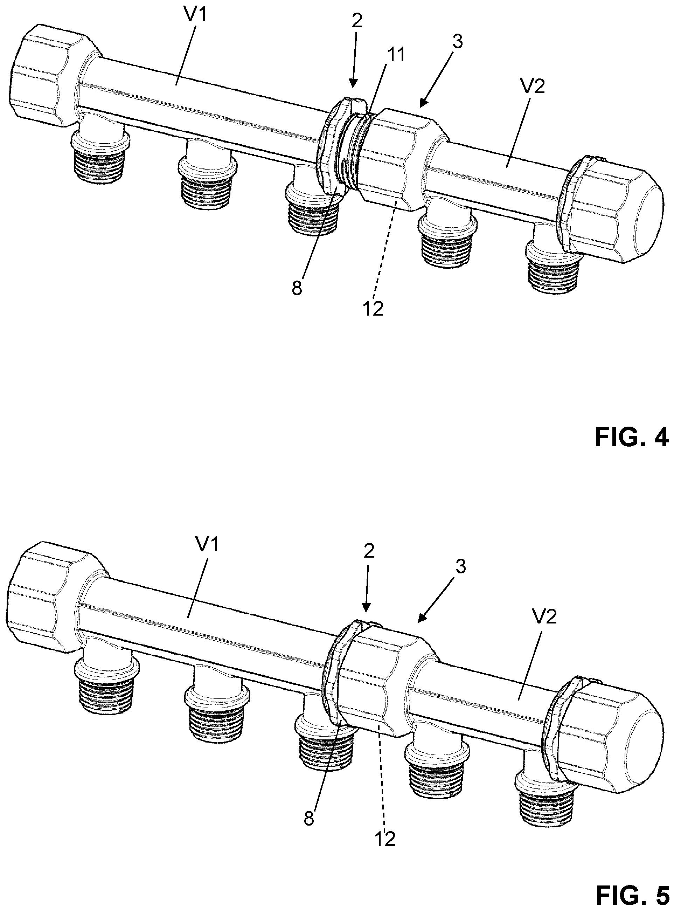

In den Figuren 4 und 5 wird die Verbindung vom Rohrabschnitt 2 mit dem Muffenabschnitt 3 genauer gezeigt. Der Rohrabschnitt 2 ist hier Teil eines ersten Verteilers V1 und der Muffenabschnitt 3 ist hier Teil eines zweiten Verteilers V2. Bei einer Variante der Montage werden die beiden Verteiler V1, V2 bzw. der Rohrabschnitt 2 zum Muffenabschnitt 3 bezüglich ihrer Orientierung um die Mittelachse M ausgerichtet. Nach erfolgter Ausrichtung wird das Gewindeelement 8 relativ zum feststehenden Rohrabschnitt 2 gedreht, so dass sich das Aussengewinde 11 in das Innengewinde 12 einschraubt. Bei einer anderen Variante der Montage wird das Gewindeelement 8 relativ zum feststehenden Rohrabschnitt 2 gedreht, so dass sich das Aussengewinde 11 in das Innengewinde 12 einschraubt. Nach erfolgter Schraubverbindung werden die beiden Verteiler V1, V2 bzw. der Rohrabschnitt 2 zum Muffenabschnitt 3 bezüglich ihrer Orientierung um die Mittelachse M ausgerichtet. Durch die Schraubbewegung werden die beiden Verteiler V1, V3 bzw. der Rohrabschnitt 2 und der Muffenabschnitt 3 aufeinander zu bewegt. In dieser Ausführungsform weist jeder Verteiler V1, V2 eine Rohrabschnitt 2 und einen Muffenabschnitt 3 auf.

Bei vollendeter Verbindung liegt das Dichtelement auf der genannten Dichtfläche 23.

In den Figuren 6 und 7 wird eine Weiterbildung der Anordnung 1 gezeigt. Gleiche Teile tragen gleiche Bezugszeichen. Der erste Lagerabschnitt 6 weist gemäss der Weiterbildung mindestens ein erstes Ratschenelement 24 auf und der zweite Lagerabschnitt 9 weist mindestens ein zweites Ratschenelement 25 auf. Die beiden Ratschenelemente 24, 25 stellen eine Ratschenfunktion zwischen dem Gewindeelement 8 und dem Rohrabschnitt 2 bereit. In der gezeigten Variante weist das Gewindeelement 8 eine Vielzahl von den zweiten Ratschenelement 25 auf. Am ersten Lagerabschnitt 9 sind zwei erste Ratschenelement 24 bezüglich der Mittelachse M einander gegenüber angeordnet.

### BEZUGSZEICHENLISTE

- 1: Anordnung
- 2: Rohrabschnitt
- 3: Muffenabschnitt
- 4: Seitenwand
- 5: Rohrinnenraum
- 6: erster Lagerabschnitt
- 7: erste Lagerfläche
- 8: Gewindeelement
- 9: zweiter Lagerabschnitt
- 10: zweite Lagerfläche
- 11: Aussengewinde
- 12: Innengewinde
- 13: Elementteile
- 14: erste Kontaktfläche
- 15: zweite Kontaktfläche
- 16: Anschlagsfläche
- 17: Stirnfläche
- 18: Gewindeprofil
- 19: Rastverbindung
- 20: Rastlasche
- 21: Rastausnehmung
- 22: Frontende
- 23: Dichtfläche
- 24: erstes Ratschenelement
- 25: zweites Ratschenelement
- 26: Anschlussstutzen
- 27: Nute
- 28: Dichtelement
- 29: Griffmulden
- 30: Rohreingang
- 31: Rohrausgang
- 32: Betätigungselement
- 33: Anschlagsfläche
- 34: Stirnfläche
- 35: Indikatorring
- V1, V2: Verteiler
- M: Mittelachse
- E: Ebene

## Patentansprüche

1. Anordnung (1) zur Verbindung von einem Rohrabschnitt (2) mit einem Muffenabschnitt (3), umfassend
den genannten Rohrabschnitt (2) mit einer sich um eine Mittelachse (M) herumerstreckenden Seitenwand (4), welche einen Rohrinnenraum (5) seitlich begrenzt, welche Seitenwand (4) aussenseitig einen ersten Lagerabschnitt (6) mit einer ersten Lagerfläche (7), welche sich um die Mittelachse (M) herum erstreckt, aufweist, und
ein Gewindeelement (8) mit einem zweiten Lagerabschnitt (9), der eine zweite sich um die Mittelachse (M) herumerstreckende Lagerfläche (10) aufweist, sowie mit einem Aussengewinde (11), welches mit einem Innengewinde (12) des Muffenabschnitts (3) verschraubbar ist,
wobei das Gewindeelement (7) mit der zweiten Lagerfläche (10) auf der ersten Lagerfläche (7) um die Mittelachse (M) relativ zum feststehenden Rohrabschnitt (2) drehbar gelagert ist.

2. Anordnung nach Anspruch 1, **dadurch gekennzeichnet, dass** das Gewindeelement (7) durch mindestens zwei miteinander verbindbare Elementteile (13) bereitgestellt wird.

3. Anordnung nach Anspruch 2, **dadurch gekennzeichnet, dass** die Elementteile (13) mit einer Bewegung in eine Richtung (Q) quer zur Mittelachse (M) auf den ersten Lagerabschnitt (6) aufsetzbar sind; und/oder dass genau zwei der genannten Elementteile (13) vorhanden sind.

4. Anordnung (1) nach einem der vorhergehenden Ansprüche 2 oder 3, **dadurch gekennzeichnet, dass** die Elementteile (13) jeweils eine erste Kontaktfläche (14) und eine zweite Kontaktfläche (15) aufweisen, wobei im aufgesetzten Zustand die jeweiligen Kontaktflächen (14, 15) von zwei benachbarten Elementteilen (13) miteinander in Kontakt sind.

5. Anordnung (1) nach Anspruch 4, **dadurch gekennzeichnet, dass** die genannten Kontaktflächen (14, 15) in geometrischen Ebenen liegen, welche sich durch die Mittelachse (M) hindurch erstrecken.

6. Anordnung (1) nach einem der vorhergehenden Ansprüche 2 bis 5, **dadurch gekennzeichnet, dass** jeweils zwei benachbart zueinander liegende Elementteile (13) über mindestens eine Rastverbindung (19) miteinander verbindbar sind, wobei die mindestens eine Rastverbindung (19) durch mindestens eine Rastlasche (20) und eine Rastausnehmung (21) bereitgestellt wird, wobei die mindestens eine Rastlasche (20) im verbundenen Zustand verrastend in die Rastausnehmung (21) eingreift.

7. Anordnung (1) nach Anspruch 6, **dadurch gekennzeichnet, dass**, insbesondere in Richtung der Mittelachse (M) gesehen, die Rastlasche (20) im Wesentlichen spielfrei in der Rastausnehmung (21) liegt, derart, dass die Elementteile (13) über die spielfreie Passung zwischen Rastlasche (20) und Rastausnehmung (21) zueinander ausrichtbar sind.

8. Anordnung (1) nach einem der vorhergehenden Ansprüche 2 bis 7, **dadurch gekennzeichnet, dass** das Aussengewinde (11) ein Gewindeprofil (18) aufweist, wobei jedes der Elementteile (13) einen Abschnitt des Gewindeprofils (18) aufweist, wobei die Abschnitte des Gewindeprofils (18) von benachbarten Elementteilen jeweils fluchtend zueinander sind, so dass im aufgesetzten Zustand ein kontinuierlich umlaufendes Gewinde bereitgestellt wird.

9. Anordnung (1) nach einem der vorhergehenden Ansprüche, **dadurch gekennzeichnet, dass** der erste Lagerabschnitt (6) zwei beabstandet zueinander liegende Anschlagsflächen (16) aufweist, welche sich von der ersten Lagerfläche (7) weg erstrecken, und dass das Gewindeelement (8) über zwei beabstandete Stirnflächen (17) verfügt, wobei im aufgesetzten Zustand die jeweiligen Anschlagsfläche (16) den jeweiligen Stirnflächen (17) des Gewindeelements (8) zugewandt sind.

10. Anordnung nach Anspruch 9, **dadurch gekennzeichnet, dass** der Abstand zwischen den beiden Stirnflächen (17) in Richtung der Mittelachse (M) gesehen leicht kleiner ist als der Abstand zwischen den beiden Anschlagsflächen (16) in Richtung der Mittelachse (M) gesehen, so dass das Gewindeelement (8) mit leichtem Spiel auf dem ersten Lagerabschnitt (6) liegt.

11. Anordnung (1) nach einem der vorhergehenden Ansprüche, **dadurch gekennzeichnet, dass** der Rohrabschnitt (2) ein Frontende (22) aufweist, wobei zwischen dem Frontende (22) und dem ersten Lagerabschnitt (6) eine sich um die Mittachse (M) herum erstreckende Dichtfläche (23) angeordnet ist, an welcher ein Dichtelement (28) des Muffenabschnitts (3) platzierbar ist; oder an welcher ein Dichtelement angeordnet ist.

12. Anordnung (1) nach einem der vorhergehenden Ansprüche, **dadurch gekennzeichnet, dass** das Gewindeelement (8) einen Betätigungsabschnitt (32) aufweist, wobei der Betätigungsabschnitt (32) eine radiale Ausdehnung aufweist, die grösser ist als der Aussendurchmesser des Aussengewindes (11); und/oder dass das Gewindeelement (8) einen Indikatorring (35) oder eine Indikatormarkierung aufweist.

13. Anordnung (1) nach einem der vorhergehenden Ansprüche, **dadurch gekennzeichnet, dass** der erste Lagerabschnitt (6) mindestens ein erstes Ratschenelement (24) aufweist und dass der zweite Lagerabschnitt (9) mindestens ein zweites Ratschenelement (25) aufweist, wobei die beiden Ratschenelemente (24, 25) eine Ratschenfunktion zwischen dem Gewindeelement (8) und dem Rohrabschnitt (2) bereitstellen.

14. Anordnung (1) nach einem der vorhergehenden Ansprüche, **dadurch gekennzeichnet, dass** der Rohrabschnitt (2) Teil eines Verteilers (V1) ist, wobei der Verteiler (V1) mindestens einen Anschlussstutzen (26) aufweist.

15. Anordnung (1) nach Anspruch 14, **dadurch gekennzeichnet, dass** einer der genannten Anschlussstutzen (26) quer zur Mittelachse (M) von der Seitenwand (4) abragt.

16. Anordnung (1) nach einem der vorhergehenden Ansprüche, **dadurch gekennzeichnet, dass** der Rohrabschnitt (2) aus Metall, insbesondere aus einer Messinglegierung, wie CW724R bzw. CuZn21Si3P oder CC470K bzw. CuSn4Zn2PS ist; und/oder dass das Gewindeelement (8) aus Kunststoff, insbesondere aus einem Polyamid, wie PA-GF oder PA-I-GF ist.

17. Anordnung (1) nach einem der vorhergehenden Ansprüche, **dadurch gekennzeichnet, dass** die Anordnung (1) weiterhin den genannten Muffenabschnitt (3) mit dem Innengewinde (12) umfasst, wobei bei der Montage der Muffenabschnitt (3) und der Rohrabschnitt (2) radial zur Mittelachse (M) zueinander ausgerichtbar sind, und wobei das Gewindeelement (8) relativ zum feststehenden Muffenabschnitt (3) und zum feststehenden Rohrabschnitt (2) drehbar ist, derart, dass das Aussengewinde (11) mit dem Innengewinde (4) verschraubbar ist.

18. Anordnung (1) nach Anspruch 17, **dadurch gekennzeichnet, dass** der Muffenabschnitt (3) eine Nute (27) aufweist, in welcher ein Dichtelement (28), insbesondere ein Dichtungsring oder ein O-Ring, angeordnet ist; und/oder dass der Muffenabschnitt (3) Teil eines weiteren Verteilers (V2) ist; und/oder dass der Muffenabschnitt (3) eine Anschlagsfläche (33) aufweist, an welcher im vollständig montierten Zustand eine vordere Stirnfläche (34) des Rohrabschnitts (2) anschlägt, wobei die Dichtfläche (23) und das Dichtelement (28) derart angeordnet sind, dass diese dichtend miteinander in Kontakt sind, wenn die Anschlagsfläche (33) und die Stirnfläche (34) anschlagend miteinander in Kontakt sind.

19. Verfahren zur Montage einer Anordnung nach einem der vorhergehenden Ansprüche, **dadurch gekennzeichnet, dass** in einem Schritt der Ausrichtung der Rohrabschnitt (2) und der Muffenabschnitt (3) relativ zueinander bezüglich einer Radialstellung radial zur Mittelachse (M) ausgerichtet werden, und dass in einem Schritt der Verbindung das Gewindeelement (8) relativ zum feststehenden Rohrabschnitt (2) und zum feststehenden Muffenabschnitt (3) drehbar ist, derart, dass das Aussengewinde (11) mit dem Innengewinde (4) verschraubt wird.
